# EUROPÄISCHE PATENTSCHRIFT

(11) **EP 1 460 510 B1**
(45) Veröffentlichungstag und Bekanntmachung des Hinweises auf die Patenterteilung: **11.10.2006**
(21) Anmeldenummer: 04001239.5
(22) Anmeldetag: 21.01.2004
(51) Int. Cl.: G06F 1/00, H04L 9/32, G06F 13/10, G06F 9/06

(54) **Verfahren zur sicheren Kommunikation zwischen einer Datenverarbeitungsanlage und einer Sicherheitseinrichtung**
Method for secure communication between data processing equipment and a security device
Procédé de communication sécurisée entre un calculateur électronique et un équipement de sécurité

(30) Priorität: 22.01.2003 DE 10302427
(43) Veröffentlichungstag der Anmeldung: 22.09.2004
(73) Patentinhaber: Fujitsu Siemens Computers GmbH, 80807 München (DE)
(72) Erfinder: Altmann, Helmut, 82110 Germering (DE)
(74) Vertreter: Epping - Hermann - Fischer

(56) Entgegenhaltungen:
- EP-A- 1 387 282
- WO-A-00/54126
- WO-A-98/15082
- US-A- 5 325 430
- US-A- 5 923 759
- LIM C H ET AL: "SMART CARD READER" IEEE TRANSACTIONS ON CONSUMER ELECTRONICS, IEEE INC. NEW YORK, US, Bd. 39, Nr. 1, 1. Februar 1993 (1993-02-01), Seiten 6-12, XP000359173 ISSN: 0098-3063

## Beschreibung

Die Erfindung betrifft ein Verfahren zum Betreiben eines Datenverarbeitungssystems mit einer Sicherheitseinrichtung gemäß dem Oberbegriff des Patentanspruchs 1 und ein Datenverarbeitungssystem, das zur Durchführung des Verfahrens geeignet ist.

Um elektronische Datenverarbeitungssysteme oder andere informationstechnische Einrichtungen vor unbefugtem Zugriff Dritter zu schützen, gewinnen Sicherheitseinrichtungen, die benutzerspezifische Informationen verarbeiten, immer mehr an Bedeutung.

Bekannte Beispiele solcher Sicherheitseinrichtungen sind ein Smartcard-Leser oder ein Fingerabdruckssystem. Diese Sicherheitseinrichtungen sind meist mit einer elektronischen Datenverarbeitungsanlage verbunden. Ein Benutzer muß sich gegenüber der Sicherheitseinrichtung authentifizieren, um bei der Datenverarbeitungsanlage eine gewünschte Funktion nutzen zu können. Nach dem Starten des Datenverarbeitungssystems initialisiert ein systemspezifischer Befehlssatz, häufig auch "BIOS" genannt im Rahmen einer sogenannten "Pre-boot-Phase" die vorhandene Hardware, unter anderem auch die Sicherheitseinrichtung. Nach dieser Initialisierung wird das Betriebssystem geladen, welches die Kontrolle über alle Schnittstellen und alle daran angeschlossenen Einrichtungen übernimmt. Das Betriebssystem oder Applikationsprogramme kennen den Aufbau und die Arbeitsweise der jeweiligen Sicherheitseinrichtungen und können direkt mit ihr kommunizieren.

Als typisches Beispiel sei ein Smartcard-Leser genannt, der zur Anmeldung an einem Datenverarbeitungssystem verwendet wird. Ein Benutzer legt zur Authentifizierung seine Smartcard in den Smartcard-Leser, wobei die auf der Smartcard verschlüsselten Daten vom Applikationsprogramm mit dem Smartcard-Leser zuerst gelesen und dann zur Authentifizierung entschlüsselt werden. Die von der Smartcard gelesenen Daten werden mit einem in einer Datenbank abgelegten Datensatz verglichen und bei positiver Übereinstimmung erfolgt die Anmeldung. Um verschiedene Sicherheitseinrichtungen verwenden zu können, bietet das Betriebssystem meist eine Auswahl von Programmen für die jeweilige Sicherheitseinrichtung an.

Ein Nachteil einer solcher Anordnung ist die direkte Kommunikation des Applikationsprogramms oder Betriebssystems mit der Sicherheitseinrichtung. Bei Sicherheitseinrichtungen, die proprietäre Standards verwenden, muß die Entwicklung der Hardware und Software gemeinsam erfolgen. Ein für das Betriebssystem zuständiger Entwickler muß daher auch Kenntnisse über den internen Aufbau und die Wirkungsweise der Sicherheitseinrichtung besitzen. Da Hardware und Software meist nicht von der gleichen Firma stammen, wird die Zusammenarbeit bei Wahrung von Firmengeheimnissen deutlich erschwert. Ein weiterer Nachteil ist das Abhören des Datenverkehrs zwischen Betriebssystem und Sicherheitseinrichtung oder das unbefugte Kopieren der von der Sicherheitseinrichtung gelieferten Daten durch ein drittes Programm.

Ein anderer bekannter Ansatz ist, die Sicherheitseinrichtung nicht von den Applikationsprogrammen direkt, sondern nur über das BIOS (Basic Input Output System) anzusprechen.

Ein Computersystem mit einer Sicherheitseinrichtung, die auf diese Weise angesprochen wird, ist beispielsweise aus der Patentschrift US 5 325 430 bekannt. Die Sicherheitseinrichtung kann zur Authentifizierung und zur Ver- und Entschlüsselung sicherheitsrelevanter Daten eingesetzt werden.

Die Druckschrift WO 00/54126 offenbart ein abgesichertes Computersystem, bei dem eine Sicherheiteinrichtung nicht nur Authentifizierungsaufgaben vornimmt, sondern darüberhinaus überprüft, ob die Integrität des Computers, beispielsweise durch Viren oder andere Sicherheitslücken, geschädigt ist. Bevorzugt wird auch hier die Kommunikation zwischen Computer und Sicherheitseinrichtung über das BIOS geführt.

Ein Vorteil der Kommunikation über das BIOS ist, dass Anwenderprogramme ohne spezifische Anpassungen mit verschiedenen Sicherheitseinrichtungen zusammenspielen können, da das BIOS für das Anwenderprogramm eine einheitliche Schnittstelle darstellt. Nachteilig ist jedoch, dass nur standardisierte, vom BIOS unterstützte Sicherheitseinrichtungen eingesetzt werden können.

Die Aufgabe der vorliegenden Erfindung ist es daher, ein Verfahren zu beschreiben, bei dem Programme eines Datenverarbeitungssystems mit beliebigen, auch nicht standardisierten Sicherheitseinrichtung zusammenarbeiten können und trotzdem die an die Sicherheitseinrichtung gerichteten Anfragen der Programme auf einheitliche und sichere Art erfolgen. Diese Aufgabe wird erfindungsgemäß durch die Merkmale des Patentanspruchs 1 gelöst.

Dabei ist eine Anordnung auf einem Datenverarbeitungssystem und eine Sicherheitseinrichtung vorzusehen, bei der das Datenverarbeitungssystem einen systemspezifischen Befehlssatz (BIOS) in einem nichtflüchtigen Speicher enthält. Innerhalb des BIOS sind alle Funktionen, alle Parameter und alle Bewertungskriterien für die Kommunikation zwischen dem Datenverarbeitungssystem und der damit verbundenen Sicherheitseinrichtung enthalten. Das Betriebssystem besitzt keine spezifischen Kenntnisse mehr über die Sicherheitseinrichtung, sondern kommunizieren mit der Sicherheitseinrichtung, in dem sie an das BIOS eine allgemeine, die Sicherheitseinrichtung betreffende Aufgabe stellen, und das (BIOS) dazu die Anfrage in einer für die Sicherheitseinrichtung spezifischen Form an das Betriebssystem oder das Applikationsprogramm zurücksendet.

Die während der Kommunikation zwischen BIOS und Sicherheitseinrichtung ausgetauschten Daten werden also erfindungsgemäß über das Anwendungsprogramm geleitet, wodurch beliebige, auch vom BIOS nicht unterstützte, Schnittstellen zur Sicherheitseinrichtung eingesetzt werden können. Durch die Erfindung werden die Vorteile, die eine zentrale Bearbeitung der Sicherheitsanfragen im BIOS bietet, mit der Flexibilität, die der Schnittstellenzugriff über Anwendungsprogramme erlaubt, kombiniert.

Eine Weitergestaltung der Erfindung besteht in einer zweiten Datenverarbeitungsanlage, die mit der ersten über eine Schnittstelle verbunden ist und die eine an der ersten Datenverarbeitungsanlage befindliche Sicherheitseinrichtung mitbenutzen kann.

Vorteilhaft ist es ebenso, die Kommunikation zwischen allen an der Aufgabe beteiligten Komponenten mit kryptografischen Methoden durchführen zu lassen.

Im folgenden wird die Erfindung und vorteilhafte Ausgestaltungen anhand von Ausführungs- und Verfahrensbeispielen unter Bezugnahme auf die Zeichnungen näher erläutert. Im einzelnen zeigen:
- Figur 1: ein erstes erfindungsgemäßes Ausführungsbeispiel
- Figur 2: eine Weitergestaltung des ersten Ausführungsbeispiels
- Figur 3: ein erfindungsgemäßes Verfahrensbeispiel.

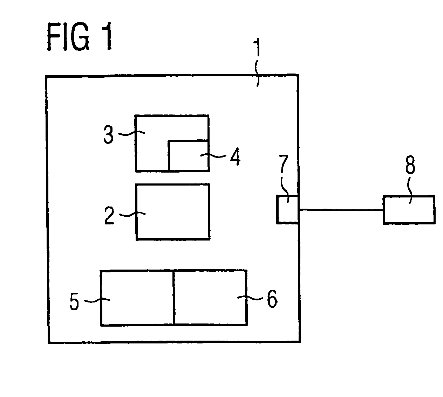

Wie aus Figur 1 ersichtlich, zeigt die Datenverarbeitungsanlage 1 eine Prozessoreinheit 2, einen nichtflüchtigen Speicher 3 und einen Hauptspeicher 5. Eine Sicherheitseinrichtung 8 ist mit einer Schnittstelle 7 des Datenverarbeitungssystems verbunden. Der nichtflüchtige Speicher 3 enthält ein BIOS 4, das über die für die Steuerung der Datenverarbeitungsanlage 1 notwendigen Befehle hinaus alle Funktionen, Parameter und Bewertungskriterien, die für eine Kommunikation zwischen Datenverarbeitungsanlage und Sicherheitseinrichtung notwendig sind, aufweist. Innerhalb des Hauptspeichers 5 befindet sich ein Applikationsprogramm 6. Die Prozessoreinheit 2 greift sowohl auf den Hauptspeicher 5 und das darin befindliche Applikationsprogramm 6 zu, als auch auf den nichtflüchtigen Speicher 3 und die Schnittstelle 7. Das Applikationsprogramm 6 hat über die Prozessoreinheit 2 auf die Schnittstelle 7 Zugriff.

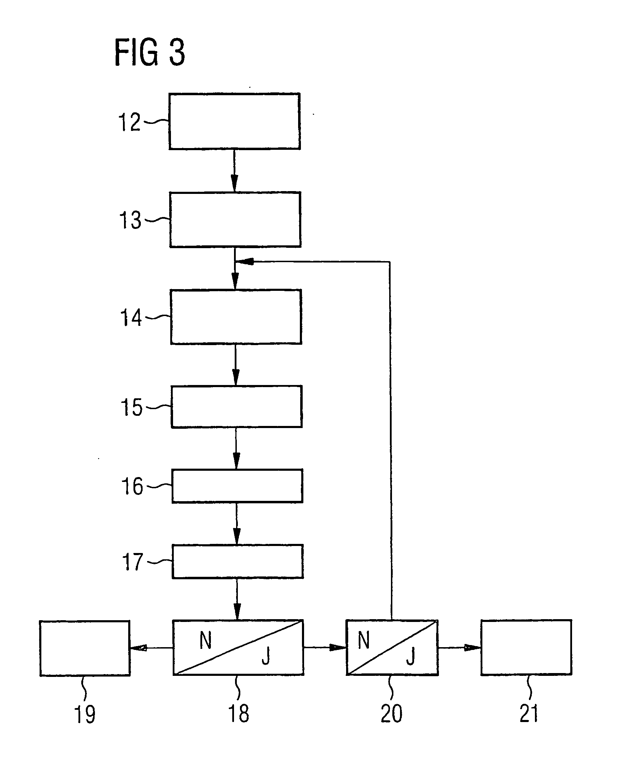

Eine Kommunikation zwischen Applikationsprogramm und Sicherheitseinrichtung erfolgt wie in Figur 3 gezeigt. Vom Applikationsprogramm wird eine die Sicherheitseinrichtung betreffende Aufgabe 12, beispielsweise eine Authentifizierung, an die Prozessoreinheit gesendet. Die Prozessoreinheit zerlegt diese Aufgabe unter Zuhilfenahme der im BIOS 4 abgelegten Funktionen und Parameter in kleine Teilaufgaben 13. Die Teilaufgaben bestehen dabei aus einzelnen Befehlen oder Parametern, die von der Sicherheitseinrichtung verarbeitet werden. Die für die Lösung der ersten Teilaufgabe notwendigen Funktionen und Parameter werden von der Prozessoreinheit an das Applikationsprogramm gesendet 14. Das Applikationsprogramm schickt diese Kommandos ohne Bewertung über die Schnittstelle 7 an die Sicherheitseinrichtung 15. Die Sicherheitseinrichtung führt diese Kommandos aus und sendet gegebenenfalls eine Antwort über die Schnittstelle an das Applikationsprogramm zurück 16. Das Applikationsprogramm übergibt diese Antwort ohne Bewertung an die Prozessoreinheit 17. Die Prozessoreinheit führt eine Bewertung 18 mit Hilfe der im BIOS 4 abgelegten Funktionen und Bewertungskriterien durch. Ist die Bewertung negativ, so wird der Vorgang abgebrochen und eine entsprechende Meldung an das Applikationsprogramm gesendet 19. Erfolgt eine positive Bewertung, so wird überprüft, ob alle zur Lösung notwendigen Teilaufgaben durchgeführt wurden 20. Ist dies nicht der Fall, wird von der Prozessoreinheit die nächste Teilaufgabe an das Applikationsprogramm weitergesendet 14. Wurden alle Teilaufgaben abgearbeitet, so wird von der Prozessoreinheit eine abschließende Antwort an das Applikationsprogramm gesendet 21.

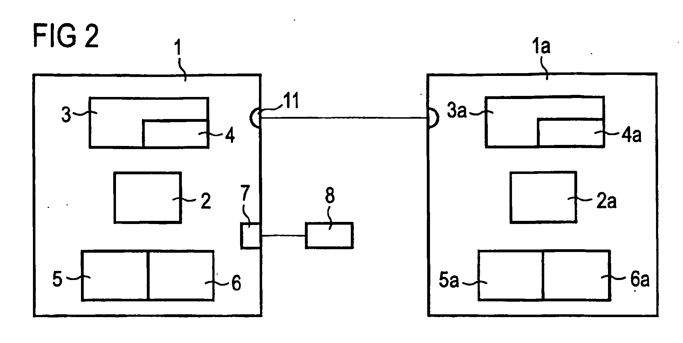

Eine vorteilhafte Weiterbildung der Erfindung ist in Figur 2 gezeigt. Dabei ist eine zweite Datenverarbeitungsanlage 1a über eine Schnittstelle 11 mit der ersten Datenverarbeitungsanlage 1 verbunden. Die zweite Datenverarbeitungsanlage 1a besitzt bis auf die Schnittstelle 7 und die damit verbundene Sicherheitseinrichtung 8 die gleichen Komponenten wie die erste Datenverarbeitungsanlage. Das Applikationsprogramm 6a im Hauptspeicher 5a der zweiten Datenverarbeitungsanlage sendet, wie in Figur 3 beschrieben, eine Aufgabe zu der Prozessoreinheit 2a der zweiten Datenverarbeitungsanlage. Die vom Prozessor 2a zurückgelieferten Funktionen und Parameter werden von dem Applikationsprogramm 6a über die Schnittstelle 11 an ein zweites Applikationsprogramm 6 im Hauptspeicher der ersten Datenverarbeitungsanlage 1 gesendet. Das Applikationsprogramm 6 schickt diese Funktionen ohne Bewertung über die Schnittstelle 7 an die Sicherheitseinrichtung 8. Die Antwort der Sicherheitseinrichtung wird vom Applikationsprogramm 6 ohne Bewertung über die Schnittstelle 11 zurückgesendet. Eine Bewertung erfolgt in der Prozessoreinheit 2a der zweiten Datenverarbeitungsanlage.

Es ist denkbar, daß die von dem Applikationsprogramm 6a über die Schnittstelle 11 gesendeten Funktionen direkt über die Schnittstelle 7 an die Sicherheitseinrichtung weitergeleitet werden.

Es ist vorteilhaft, wenn die Prozessoreinheit in einem abgesicherten Modus betrieben wird, in dem auf Daten innerhalb der Prozessoreinheit nicht zugegriffen werden kann. Dadurch wird ein Lesen oder Schreiben von Daten durch ein drittes Programm in die Prozessoreinheit während einer Bewertung einer Antwort der Sicherheitseinrichtung verhindert.

Zusätzlich ist es sinnvoll, die Kommunikation zwischen den einzelnen Komponenten beispielsweise der Prozessoreinheit und des Applikationsprogramms oder zwischen Applikationsprogramm und Sicherheitseinrichtung kryptografischen Methoden zu unterwerfen. Dies gilt insbesondere auch für die Schnittstelle 11, um so ein unbefugtes Abhören zu verhindern.

Eine andere Ausgestaltung der Erfindung ist es, eine Zerlegung der Aufgabe in Teilaufgaben nicht durchzuführen, sondern alle zur Lösung der Aufgabe notwendigen Funktionen und Parameter in einem Schritt an das Applikationsprogramm zu übertragen und nach Antwort der Sicherheitseinrichtung eine abschließende Bewertung durchzuführen.

Um verschiedene Sicherheitseinrichtungen anschließen zu können, ist es vorteilhaft, wenn im BIOS 4 bzw. 4a der jeweiligen Datenverarbeitungsanlage mehrere Funktions- und Parametersätze der verschiedenen Sicherheitseinrichtungen abgelegt sind.

Die beschriebene Prozessoreinheit 2 beschränkt sich nicht auf eine zentrale Prozessoreinheit. Denkbar ist auch eine Prozessoreinheit, die nur sicherheitsrelevante Aufgaben übernimmt. Auch das Applikationsprogramm 6 ist nicht notwendig Teil des Betriebssystems. Vorteilhaft ist es, ein Applikationsprogramm noch vor dem Laden des eigentlichen Betriebssystems vorzusehen, das beispielsweise eine Authentifizierung nach dem oben beschriebenen Verfahren durchführt.

## Patentansprüche

1. Verfahren zum Betreiben eines Datenverarbeitungssystems (1), das
einen Prozessor (2),
ein Applikationsprogramm (6) im Hauptspeicher (5),
eine Sicherheitseinrichtung (8),
eine Schnittstelle (7) zwischen Applikationsprogramm (6) und Sicherheitseinrichtung (8) und ein BIOS (4) in einem nichtflüchtigen Speicher (3) aufweist
und bei dem das Applikationsprogramm (6) eine Anfrage an die Sicherheitseinrichtung (8) stellt,
wobei das Applikationsprogramm (6) die Anfrage an die Sicherheitseinrichtung (8) an das BIOS (4) in einer allgemeinen Form leitet,
und das BIOS (4) eine das Ergebnis der Bewertung anzeigende Antwort auf die Anfrage an das Applikationsprogramm (6) sendet
**dadurch gekennzeichnet, dass**
a. das BIOS (4) alle Funktionen, alle Parameter und alle Bewertungskriterien für die Kommunikation zwischen dem Datenverarbeitungssystem (1) und der damit verbundenen Sicherheitseinrichtung (8) enthält,
b. das BIOS (4) die allgemeine Anfrage vom Applikationsprogramm (6) zunächst in einer für die Sicherheitseinrichtung (8) spezifischen Form an das Applikationsprogramm (6) zurücksendet,
c. das Applikationsprogramm (6) die Anfrage in der für die Sicherheitseinrichtung (8) spezifischen Form über die Schnittstelle (7) an die Sicherheitseinrichtung (8) sendet,
d. das Applikationsprogramm, (6) von der Sicherheitseinrichtung (8) über die Schnittstelle (7) gesendete Antwortdaten empfängt und an das BIOS (4) weiterleitet,
e. das BIOS (4) die Antwortdaten anhand gespeicherter Kriterien bewertet.

2. Verfahren nach Anspruch 1,
**dadurch gekennzeichnet, dass**
das BIOS (4) mit der Sicherheitseinrichtung (8) kommuniziert, indem die vom Applikationsprogramm (6) gestellte Anfrage an die Sicherheitseinrichtung (8) zunächst in mehrere Teile zerlegt wird und die Schritte b bis e mehrfach ausführt werden, bevor im letzten Ausführen des Schritts e eine abschließende Antwort an das Applikationsprogramm (6) gesendet wird.

3. Verfahren nach einem der Ansprüche 1 oder 2,
**dadurch gekennzeichnet, dass**
die Kommunikation zwischen BIOS (4) und Applikationsprogramm (6) und / oder zwischen Applikationsprogramm (6) und Sicherheitseinrichtung (8) verschlüsselt erfolgt.

4. Verfahren nach einem der Ansprüche 1 bis 3,
**dadurch gekennzeichnet, dass**
der Prozessor (2) während der Verarbeitung der Daten der Sicherheitseinrichtung (8) durch das BIOS (4) in einem abgesicherten Modus betrieben wird, in dem nur von dem BIOS (4) und nicht von dem Applikationsprogramm (6) auf Daten im Prozessor (2) zugegriffen werden kann.

5. Verfahren nach einem der Ansprüche 1 bis 4, wobei das Datenverarbeitungssystem (1) mit einem zweiten Datenverarbeitungssystem (1a) über eine weitere Schnittstelle (11) verbunden ist, und das zweite Datenverarbeitungssystem (1a) ein zweites Applikationsprogramm (6a) und ein zweites BIOS (4a) aufweist, **dadurch gekennzeichnet, dass** das zweite Applikationsprogramm (6a) der zweiten Datenverarbeitungsanlage (1a) eine Anfrage an die Sicherheitseinrichtung (8) der ersten Datenverarbeitungsanlage stellt.

6. Verfahren nach einem der Ansprüche 1 bis 5,
**dadurch gekennzeichnet, dass**
das Applikationsprogramm (6) und/oder das zweite Applikationsprogramm (6a) nicht notwendig Teil eines Betriebssystems sind.

7. Datenverarbeitungssystem, das zur Durchführung des Verfahrens nach einem der Ansprüche 1 bis 6 eingerichtet ist.

## Claims

1. Method for operating a data processing system (1) which has
a processor (2),
an application program (6) in the main memory (5),
a security device (8),
an interface (7) between application program (6) and security device (8) and a BIOS (4) in a non-volatile memory (3),
and in which the application program (6) sends a query to the security device (8),
wherein the application program (6) routes the query to the security device (8) to the BIOS (4) in a general form,
and the BIOS (4) sends a response to the query indicating the result of the evaluation to the application program (6),
**characterized in that**
a. the BIOS (4) contains all functions, all parameters and all evaluation criteria for the communication between the data processing system (1) and the security device (8) connected thereto,
b. the BIOS (4) first sends back the general query from the application program (6) to the application program (6) in a specific form for the security device (8),
c. the application program (6) sends the query in the specific form for the security device (8) to the security device (8) via the interface (7),
d. the application program (6) receives response data sent by the security device (8) via the interface (7) and forwards it to the BIOS (4),
e. the BIOS (4) evaluates the response data with reference to stored criteria.

2. Method according to Claim 1, **characterized in that** the BIOS (4) communicates with the security device (8) by first breaking down the query sent to the security device (8) by the application program (6) into several parts, and executing the steps b to e several times before sending a final response to the application program (6) when last executing step e.

3. Method according to one of Claims 1 or 2, **characterized in that** the communication between BIOS (4) and application program (6) and/or between application program (6) and security device (8) is performed in encrypted form.

4. Method according to one of Claims 1 to 3, **characterized in that**, during the processing of the data of the security device (8) by the BIOS (4), the processor (2) is operated in a secure mode in which it is only possible to access data in the processor (2) from the BIOS (4) and not from the application program (6).

5. Method according to one of Claims 1 to 4, in which the data processing system (1) is connected to a second data processing system (1a) via a further interface (11), and the second data processing system (1a) has a second application program (6a) and a second BIOS (4a), **characterized in that** the second application program (6a) of the second data processing system (1a) sends a query to the security device (8) of the first data processing system.

6. Method according to one of Claims 1 to 5, **characterized in that** the application program (6) and/or the second application program (6a) are not necessarily part of an operating system.

7. Data processing system which is set up to perform the method according to one of Claims 1 to 6.

## Revendications

1. Procédé d'exploitation d'un système de traitement de données (1), présentant
un processeur (2),
un programme d'application (6) dans une mémoire principale (5),
un dispositif de sécurité (8),
une interface (7) entre le programme d'application (6) et le dispositif de sécurité (8), et
un BIOS (4) dans une mémoire non volatile (3),
et dans lequel le programme d'application (6) adresse une demande au dispositif de sécurité (8),
le programme d'application (6) faisant passer la demande pour le dispositif de sécurité (8) au BIOS (4) sous une forme générale,
et le BIOS (4) envoyant au programme d'application (6) une réponse indiquant le résultat de l'évaluation à la demande,
**caractérisé en ce que**
a) le BIOS (4) comprend toutes les fonctions, tous les paramètres et tous les critères d'évaluation pour la communication entre le système de traitement de données (1) et le dispositif de sécurité (8) relié à celui-ci,
b) le BIOS (4) renvoie la demande générale du programme d'application (6) d'abord sous une forme spécifique au dispositif de sécurité (8) au programme d'application (6),
c) le programme d'application (6) envoie la demande sous la forme spécifique pour le dispositif de sécurité (8) par l'intermédiaire de l'interface (7) au dispositif de sécurité (8),
d) le programme d'application (6) reçoit des données de réponse envoyées par le dispositif de sécurité (8) par l'intermédiaire de l'interface (7) et les transmet au BIOS (4),
e) le BIOS (4) évalue les données de réponse à l'aide de critères stockés.

2. Procédé selon la revendication 1, **caractérisé en ce que** le BIOS (4) communique avec le dispositif de sécurité (8) **en ce que** la demande formulée par le programme d'application (6) au dispositif de sécurité (8) est d'abord décomposée en plusieurs parties et les étapes b à e sont exécutées plusieurs fois avant qu'à la dernière exécution de l'étape e, une réponse finale ne soit envoyée au programme d'application (6).

3. Procédé selon l'une quelconque des revendications 1 ou 2, **caractérisé en ce que** la communication entre le BIOS (4) et le programme d'application (6) et/ou entre le programme d'application (6) et le dispositif de sécurité (8) s'effectue de façon codée.

4. Procédé selon l'une quelconque des revendications 1 à 3, **caractérisé en ce que** le processeur (2) est exploité pendant le traitement des données du dispositif de sécurité (8) par le BIOS (4) dans un mode sécurisé, dans lequel seul le BIOS (4) mais pas le programme d'application (6) peut accéder aux données dans le processeur (2).

5. Procédé selon l'une quelconque des revendications 1 à 4, dans lequel le système de traitement de données (1) est relié à un deuxième système de traitement de données (1a) par l'intermédiaire d'une autre interface (11), et le deuxième système de traitement de données (1a) présente un deuxième programme d'application (6a) et un deuxième BIOS (4a), **caractérisé en ce que** le deuxième programme d'application (6a) de la deuxième installation de traitement de données (1a) adresse une demande au dispositif de sécurité (8) de la première installation de traitement de données.

6. Procédé selon l'une quelconque des revendications 1 à 5, **caractérisé en ce que** le programme d'application (6) et/ou le deuxième programme d'application (6a) ne font pas nécessairement partie d'un système d'exploitation.

7. Système de traitement de données configuré pour la mise en oeuvre du procédé selon l'une quelconque des revendications 1 à 6.
